# EUROPÄISCHE PATENTANMELDUNG

(11) **EP 2 514 734 A1**
(43) Veröffentlichungstag der Anmeldung: **24.10.2012**
(21) Anmeldenummer: 11163002.6
(22) Anmeldetag: 19.04.2011
(51) Int. Cl.: C04B 41/48, C04B 41/52, C04B 41/63, C04B 41/71, E04C 2/26

(54) **Verfahren zum Lackieren von Spanplatten**

(71) Anmelder: Falquon GmbH, 16928 Pritzwalk (DE)
(72) Erfinder:
(74) Vertreter: Morawski, Birgit

(57) **Zusammenfassung**

Die vorliegende Erfindung betrifft ein Verfahren zum Lackieren von Spanplatten, insbesondere Zementspanplatten, umfassend die Schritte a) des Auftragens von mindestens einem ersten Lack mit einer Viskosität zwischen 10 bis 100 dPas zur Ausbildung von mindestens einer ersten Lackschicht, b) der zumindest teilweise Härtung der mindestens ersten Lackschicht, und c) des Auftragens von mindestens einem zweiten Lack mit einer Viskosität zwischen 10 bis 100 dPas zur Ausbildung von mindestens einer zweiten Lackschicht auf der mindestens ersten Lackschicht. Die Erfindung betrifft ebenfalls eine Spanplatte herstellbar nach diesem Verfahren und deren Verwendung.

## Beschreibung

Die vorliegende Erfindung betrifft ein Verfahren nach dem Oberbegriff des Anspruchs 1 und eine Spanplatte nach Anspruch 13.

Im Industriebau und bei öffentlichen Bauten werden zunehmend Fassaden unter Verwendung von zum Teil sehr aufwändigen Systemen verkleidet. Neben der dekorativen Aufwertung der Außenwände eines Gebäudes gibt es eine Vielzahl weiterer Gründe zur Verkleidung von Fassaden. Insbesondere sei dabei auf den Schutz gegen Wärme und Kälte, die Vermeidung einer direkten Klimaeinwirkung auf das Gebäude oder die Gewinnung von Energie hingewiesen.

Als nachteilig haben sich jedoch in der Vergangenheit die relativ hohen Kosten derartiger Fassadensysteme inklusive der notwendigen Befestigungssysteme und Montage erwiesen, die bei mehreren 100 € pro Quadratmeter liegen können. Dies hat unter anderem damit zu tun, dass für die eingesetzten Plattenmaterialien erhöhte Anforderungen an die Witterungs-und Lichtbeständigkeit bestehen. Darüber hinaus müssen die Platten ebenfalls erhöhte Anforderungen im Hinblick auf deren Brennbarkeit erfüllen.

Die Verwendung von zementgebundenen Spanplatten im Bereich der Außenfassade ist bekannt. Diese zementgebundene Platten können üblicherweise Fasern aus Zellulose, Papier, Holz oder Glas aufweisen, welche durch ein anorganisches Bindemittel wie zum Beispiel Zement zusammengehalten werden (DD 275863 A1, DE 10 060 212 A1, DE 10 2004 022 227 A1).

Bei konventionell hergestellten zementgebundenen Spanplatten treten bei Bewitterungs- und Bestrahlungsversuchen Vergilbungen auf, was insbesondere bei der Verwendung von pigmentierten Zementspanplatten ein großes Problem darstellt. Auch können durch Feuchteverschiebungen in konventionellen Zementspanplatten Ausschwitzungen von kalkhaltigen Substanzen auf der Oberfläche auftreten, wodurch ein Grauschleier erzeugt wird. Beides kann zu Beanstandungen bis hin zum kompletten Austausch der Fassadenplatten führen, was mit erheblichen Kosten verbunden ist.

Zur Erhöhung der Stabilität von zementgebundenen Holzfaserplatten ist das Auftragen von zusätzlichen Schutzschichten, die keine Holzfasern enthalten, auf eine Trägerplatte aus zementgebundenen Holzfasern bekannt (WO 03/016626 A2). Diese zusätzliche Schutzschicht kann durch geeignete Dekormotive oder Texturen modifiziert werden.

Die Verwendung von zementgebundenen Spanplatten ist jedoch mit einer Reihe von Problemen verbunden. Zunächst führt der Herstellungsprozess von zementgebundenen Spanplatten zu Produkten mit deutlich höheren Toleranzen als bei der Herstellung von normalen Holzwerkstoffplatten. Diese Toleranzen bzw. Abweichungen können bei einer mittleren Plattenstärke von 15 mm durchaus im Bereich 1 mm liegen.

Des Weiteren weisen zementgebundene Spanplatten in ihrer Oberfläche typischerweise Löcher auf, die im Durchmesser mehrere Millimeter und in der Tiefe bis zu 1 mm betragen können. Dies erschwert die Oberflächenveredelung der zementgebundenen Spanplatten z.B. mittels Lackierung deutlich.

Ein Abschleifen bzw. Herausschleifen der Toleranzen und Löcher können Materialverluste von bis zu 20 % mit sich führen, wodurch die Kosten für die Platten deutlich erhöht werden.

Als Alternative bietet sich das Spachteln der Platten mit einem anschließenden Zwischenschliff und dem nachfolgenden Auftragen der Lackschichten an. Dies ist jedoch auch nur bei einer Platte mit einer geringen Stärketoleranz möglich.

Eine weitere Alternative besteht in der Lackierung der zementgebundenen Spanplatten in einer Gießmaschine. Aufgrund der erheblichen Stärketoleranzen der Spanplatten führt dies jedoch zu einer sehr hohen Variation der aufgetragenen Lackmenge, da der Lack von den Erhebungen herunter läuft und sich in großflächigen Vertiefungen sammelt. Eine ungleichmäßige Lackoberfläche ist die Folge.

Aus der EP 2 050 886 A2 ist bekannt, eine Bauplatte mit poröser Oberfläche zunächst mit einer Materialschicht z.B. aus einem Klebstoff zu versehen, die in mehreren Arbeitsgängen aufgebracht werden kann. Das Material haftet nach dem Aushärten fest auf der Oberfläche der Bauplatte an und bildet eine Deckschicht, deren Oberfläche zum Bedrucken geeignet ist. Zum Ausgleich von Unebenheiten und Poren wird die Oberfläche zunächst jedoch mit einem Füller versehen auf den wiederum ein Primer auftragbar ist. Insbesondere das Auftragen eines geeigneten Füllermateriales erfordert einen hohen maschinellen Aufwand und trägt somit zu den derzeitig hohen Kosten von zementgebundenen Spanplatten bei.

Der vorliegenden Erfindung liegt die Aufgabe zugrunde ein Verfahren bereitzustellen, welches die Bereitstellung von Spanplatten, insbesondere von zementgebundenen Spanplatten, mit einer lackierten Oberfläche in einer effektiven und kostengünstigen Weise ermöglicht. Auch sollten die mittels dieses Verfahrens herzustellenden zementgebundenen Spanplatten keine Nachteile bei der Montage gegenüber den herkömmlichen Spanplatten aufweisen.

Diese Aufgabe wird gemäß der vorliegenden Erfindung durch ein Verfahren mit den Merkmalen des Anspruchs 1 gelöst.

Dementsprechend umfasst das Verfahren zum Lackieren von Spanplatten, insbesondere Zementspanplatten, die Schritte des a) Auftragens von mindestens einem ersten Lack mit einer Viskosität zwischen 10 bis 100 dPas zur Ausbildung von mindestens einer ersten Lackschicht, b) der zumindest teilweisen Härtung der mindestens ersten Lackschicht, und c) des Auftragens von mindestens einem zweiten Lack mit einer Viskosität zwischen 10 bis 100 dPas zur Ausbildung von mindestens einer zweiten Lackschicht auf der mindestens ersten Lackschicht.

Das Auftragen der mindestens ersten und/oder mindestens zweiten Lackschicht erfolgt bevorzugt bei Temperaturen zwischen 25 und 40°C, wobei eine Temperatur zwischen 25°C und 30°C besonders bevorzugt ist.

Erfindungswesentlich ist somit die Verwendung eines Lacks bzw. einer Lacklösung mit einer gezielt eingestellten Viskosität. Die Viskosität gilt allgemein als Maß für die Zähflüssigkeit einer Flüssigkeit. Je größer die Viskosität ist, desto dickflüssiger bzw. weniger fließfähig ist die Flüssigkeit. Das vorliegende Verfahren macht sich also gezielt die Fließfähigkeit des aufzutragenden Lackes zu Nutze, wobei der Lack mit einer relativ hohen Viskosität auf die Oberfläche der Spanplatte aufgetragen wird und bereits während des Auftragens die auf der Oberfläche vorhandenen Unebenheiten ausgleichen kann. Die bisher üblichen Vorbehandlungsschritte von Zementspanplatten entfallen somit.

Das vorliegende Verfahren ermöglicht somit die Lackierung einer Zementspanplatte, wobei zum einen eine geschlossene Oberfläche auf der Zementspanplatte erzeugt wird, und wobei zum anderen jedoch keine glatt lackierte Oberfläche erzeugt wird. Mit diesem Verfahren wird ein Kompromiss zwischen Produktionskosten und den technischen Anforderungen an das Produkt ermöglicht.

Die in der Oberfläche der Spanplatte vorhandenen Löcher sind komplett mit Lack abgedeckt und diese Lackschicht ist ausreichend stark bzw. dick, um eine genügend hohe Witterungs-und Lichtbeständigkeit aufzuweisen.

In einer bevorzugten Ausführungsform beträgt die Viskosität des Lackes zur Herstellung der mindestens ersten und/oder mindestens zweiten Lackschicht 10 bis 75 dPas, insbesondere 12 bis 60 dPas, ganz besonders bevorzugt bei 45 dPas.

In einer Ausführungsform des vorliegenden Verfahrens wird mindestens eine Oberfläche der Spanplatte vor Auftragen der mindestens ersten Lackschicht in Schritt a) einem Reinigungsschritt ausgesetzt. In diesem Reinigungsschritt erfolgt lediglich die Entfernung von auf der Oberfläche der Spanplatte anhaftenden Schmutzpartikeln. Eine Entfernung von in den Werkstoff eingebundenen Material, Dellen oder Einbuchtungen erfolgt hingegen nicht, so dass kein signifikanter Materialabtrag stattfindet.

Das vorliegende Verfahren umfasst demnach bevorzugt nicht den Schritt des Verspachtelns oder Auftragens einer Füllmasse oder eines Primers. Der üblicherweise mit dem Spachteln verbundene, maschinell sehr aufwendige Arbeitsgang entfällt somit. Auch entfällt ein Herausschleifen von Löchern oder anderen Unebenheiten. Durch das Weglassen des mechanischen Bearbeitens der Oberfläche der Zementspanplatte treten nur geringe Materialverluste auf. Insgesamt erlaubt das vorliegende Verfahren eine Einsparung von Arbeitschritten und Material und ermöglicht eine effizientere und kostengünstigere Herstellung von zementgebundenen Spanplatten, die für die Anwendung im Außenbereich geeignet sind.

In einer weiteren Ausführungsform des vorliegenden Verfahrens erfolgt nach dem Auftragen der mindestens zweiten Lackschicht eine vollständige Härtung der aufgetragenen Lackschichten. Eine Aushärtung der Lackschichten kann dabei mittels Wärme, UV-Strahlung und/oder Elektronenstrahlung erfolgen.

Die Strahlungshärtung erfolgt somit bevorzugt durch die Einwirkung von energiereicher Strahlung wie z.B. UV-Strahlung oder durch Bestrahlung mit energiereichen Elektronen. Als Strahlungsquellen dienen bevorzugterweise Laser, Hochdruckquecksilberdampflampen, Blitzlicht, Halogenlampen oder Excimerstrahler. Die üblicherweise zur Aushärtung bzw. Vernetzung ausreichende Strahlungsdosis liegt bei UV-Härtung im Bereich von 80-3000 mJ/cm². Gegebenenfalls kann die Bestrahlung auch unter Ausschluss von Sauerstoff d.h. in einer Inertgas-Atmosphäre durchgeführt werden. Bei Anwesenheit von Sauerstoff bildet sich Ozon, wodurch die Oberfläche matt wird. Geeignete Inertgase sind unter anderem Stickstoff, Edelgase oder Kohlendioxid. Das vorliegende Verfahren wird bevorzugt unter einer Stickstoff-Atmosphäre durchgeführt.

In einer bevorzugten Ausführungsform des Verfahrens erfolgt die Aushärtung der Lackschichten kontinuierlich, wobei die mit der oder den Lackschichten versehene Spanlatte mit konstanter Geschwindigkeit an einer Strahlungsquelle vorbeigeführt wird. Hierfür ist es erforderlich, dass die Aushärtungsgeschwindigkeit der Lackschichten ausreichend hoch ist.

Es ist bevorzugt, dass der Lack der mindestens ersten Lackschicht und der mindestens zweiten Lackschicht jeweils gleich oder verschieden voneinander sind.

Es ist weiterhin bevorzugt, dass der Lack für die mindestens erste und/oder mindestens zweite Lackschicht in einer Menge zwischen 30 bis 120 g/m², bevorzugt 50 bis 80 g/m², insbesondere bevorzugt 60 g/m² aufgetragen wird. Bei diesen Auftragsmengen kann ein Lackaufbau bzw. eine Gesamtlackschicht umfassend mindestens eine erste und mindestens eine zweite Lackschicht hergestellt werden, die jeweils eine Dicke zwischen 10 bis 1000 µm, bevorzugt zwischen 50 bis 500 µm, insbesondere bevorzugt zwischen 50 bis 150 µm aufweisen.

In einer Ausführungsform kann ein Lack verwendet werden, der aus der Gruppe der Polyacrylatlacke ausgewählt ist.

Lacke bestehen typischerweise aus mindestens einem Filmbildner oder Vernetzer, mindestens einen Weichmacher, mindestens einem Reaktivverdünner sowie ggf. einem Lösungsmittel.

In einer Ausführungsform des vorliegenden Verfahrens werden bevorzugt Polyacrylate verwendet.

Dabei basieren können die Polyacrylate auf aliphatischen Acrylaten, auf Urethanacrylaten Polyesteracrylaten und Epoxidacrylaten und/oder auf einem Gemisch aus diesen Komponenten basieren.

Bevorzugte Lacke für das vorliegende Verfahren sind demnach Polyesteracrylate, Epoxidacrylate, Urethanacrylate und aliphatische Polyacrylate.

Die Filmbildung bzw. Vernetzung erfolgt durch Polymerisation, Polykondensation und Polyaddition, Wärmezufuhr oder die Zugabe von Katalysatoren. Im Falle des vorliegenden Verfahrens wird die Filmbildung bzw. das Aushärten des Lackes bevorzugt durch die Einstrahlung von UV-Licht oder Elektronenstrahlen hervorgerufen.

Geeignete Weichmacher können Phthalsäureester, Phosphorsäureester und/oder Adipinsäureester sein. Als ggf. geeignete Lösungsmittel können Alkohole, Wasser, Ether, Aceton, Essigsäureester, Toluol und/oder Terpentinöl verwendet werden.

Auch kann der zum Einsatz kommende Lack weitere Additive wie Farbpigmente, Füllstoffe z.B. Kieselgel, Talkum, und/oder Fasern z.B. Cellulosefasern enthalten. Die verwendeten Pigmente können anorganischer Natur z.B. Erd- und Mineralpigmente oder organischer Natur z.B. Pigmentfarbstoffe sein.

In einer weiteren Ausführungsform können auch abriebfeste Partikel, Flammschutzmittel und/oder leitfähige Substanzen in der Lackschicht enthalten sein.

Als Pigmente werden insbesondere Pigmente aus Titandioxid und/oder Eisenoxid verwendet. Die Konzentration der Pigmente in der Lackschicht kann bis zu 5 Gew%, bevorzugt zwischen 1 bis 4 Gew%, insbesondere bevorzugt zwischen 1,5 bis 3,5 Gew% betragen.

Die leitfähigen Substanzen können ausgewählt sein aus der Gruppe enthaltend Russ, Kohlefasern, Metallpulver und Nanopartikel, insbesondere Kohlenstoffnanoröhren. Es können auch Kombinationen dieser Substanzen zum Einsatz kommen.

In einer weiteren Ausführungsform ist das Additiv ausgewählt aus der Gruppe der Flammschutzmittel enthaltend Phosphate, Borate, insbesondere Ammoniumpolyphosphat, Tris(tri-bromneopentyl)phosphat, Zinkborat oder Borsäurekomplexe von mehrwertigen Alkoholen.

Die Verwendung von Flammenschutzmittel führt zu einer weiteren Verringerung der Entflammbarkeit und ist daher insbesondere bei Anwendungen der Platten im Fassadenbereich von Bedeutung, die ab einer bestimmten Gebäudehöhe zum Einsatz kommen. Die Entflammbarkeit bzw. das Brandverhalten von zementgebundenen Spanplatten liegt üblicherweise gemäß DIN 4102-1 in der Klasse B1. Zementgebundene Spanplatten sind somit als brennbare, jedoch schwer entflammbare Baustoffe klassifiziert. Durch die zusätzliche Verwendung von Flammenschutzmitteln ist es im Falle der zementgebundenen Spanplatten möglich, die Klasse A2 zu erreichen, in der nicht brennbare Baustoffe mit organischen Bestandteilen zusammengefasst werden.

Die abriebfesten Partikel sind bevorzugt ausgewählt aus der Gruppe enthaltend Aluminiumoxide, Korund, Borcarbide, Siliziumdioxide, Siliziumcarbide und Glaskugeln. Die abriebfesten Partikel erhöhen die Abriebfestigkeit und Stabilität der Schutzschicht.

Prinzipiell können als zementgebundene Platte eine zementgebundene Holzfaserplatte, eine zementgebundene Holzspanplatte und/oder auch eine Gipsfaserplatte zum Einsatz kommen.

In einer Ausführungsform wird der Lack für die mindestens erste und/oder die mindestens zweite Lackschicht mittels Walzen auf die Oberfläche der Spanplatte aufgebracht wird.

Auch kann die mittels des Verfahrens mit einer Lackschicht versehene zementgebundene Platte zusätzlich mindestens eine Gegenzugsbeschichtung und/oder mindestens eine schalldämmende und/oder wärmedämmende Schicht umfassen, die jeweils auf der der Lackschicht gegenüberliegenden Seite der Spanplatte angeordnet werden können. Die Gegenzugsbeschichtung ist dabei bevorzugt aus einer Gruppe enthaltend Kraftpapier, Bitumen oder einer Mischung enthaltend Holz, Papier und Kunstharz ausgewählt, wobei die Gegenzugsbeschichtung zusätzlich mit einem wärmehärtbaren Harz ausgewählt aus der Gruppe enthaltend Melaminformaldehydharz, Harnstoffformaldehydharz, Phenolformaldehydharz oder Kombinationen davon, imprägniert sein kann.

Vor Auftragen der ersten Lackschicht ist es möglich, die Spanplatte vorzuwärmen. Nach vollständiger Aushärtung der aufgetragenen Lackschichten können die lackierten Spanplatten in gewünschter Weise weiterverarbeitet z.B. bedruckt und konfektioniert werden. Die Aufgabe der vorliegenden Erfindung wird auch durch eine Spanplatte gemäß Anspruch 13 gelöst.

Demnach weist eine Spanplatte, insbesondere Zementspanplatte, die durch das vorliegende Verfahren herstellbar ist, mindestens eine Oberfläche mit mindestens einer ersten und einer zweiten Lackschicht auf, wobei die mindestens erste Lackschicht unmittelbar auf einer unbearbeiteten Oberfläche der Spanplatte angeordnet ist.

Die vorliegende Spanplatte weist somit bevorzugt auf der mindestens einen unbearbeiteten Oberfläche keine Spachtelmasse, Füllmasse und/oder Primer auf. Auch erfolgte bevorzugt vor dem Auftragen der ersten Lackschicht kein Abschleifen oder Abtragen der Oberfläche der Spanplatte.

Die in der unbehandelten Spanplatte vor Lackauftrag vorliegenden Löcher, Dellen oder Einbuchtungen sind bevorzugt fast komplett oder komplett mit der Lackschicht versehen bzw. durch den Lackaufbau aus mindestens zwei Lackschichten abgedeckt.

Die Lackoberfläche, die sich auf der Spanplatte befindet, ist somit bevorzugt völlig glatt bzw. eben. Es kann aber auch sein, dass die Lackoberfläche bevorzugt nicht komplett glatt bzw. eben. Kleinere Dellen und Einbuchtungen können auf der Lackoberfläche vorhanden sein. Diese möglichen Unebenheiten sind zum einen auf den Produktionsprozess und zum anderen auf die Beschaffenheit der verwendeten Spanplatten zurückzuführen. So kann es durchaus passieren, dass in Abhängigkeit von der Grobheit der verwendeten Spanplatten die Unebenheiten der Spanplatte nicht komplett durch den Lackaufbau ausgeglichen werden können.

Zudem zeichnet sich die Oberfläche der vorliegenden Spanplatte bevorzugt durch eine hohe Witterungsbeständigkeit und eine hohe UV-Stabilität aus. Die UV-Stabilität der vorliegenden Spanplatten wurde basierend auf der DIN EN ISO 4892-2 (Kunststoffe, künstliches Bestrahlen oder Bewittern in Geräten - Teil 2: Xenonbogenlampen) veröffentlicht im Januar 2011 bestimmt. Nach einem Prüfungszeitraum von 1000 Stunden waren keine Veränderungen oder Mängel in der Oberfläche feststellbar.

In einer Ausführungsform beträgt die Gesamtdicke der mindestens zwei Lackschichten auf der mindestens einen Oberfläche zwischen 10 bis 1000 µm, bevorzugt zwischen 50 bis 500 µm, insbesondere bevorzugt zwischen 50 bis 150 µm.

Die vorliegende Spanplatte ist zur Anwendung im Außenbereich, insbesondere als Fassadenplatte geeignet. Andere Anwendungsbereiche, die eine hohe Beständigkeit der Platten erfordern, sind jedoch ebenfalls generell denkbar.

Die vorliegende Erfindung wird nachfolgend anhand eines Ausführungsbeispiels unter Bezugnahme auf die Figuren erläutert. Es zeigen:

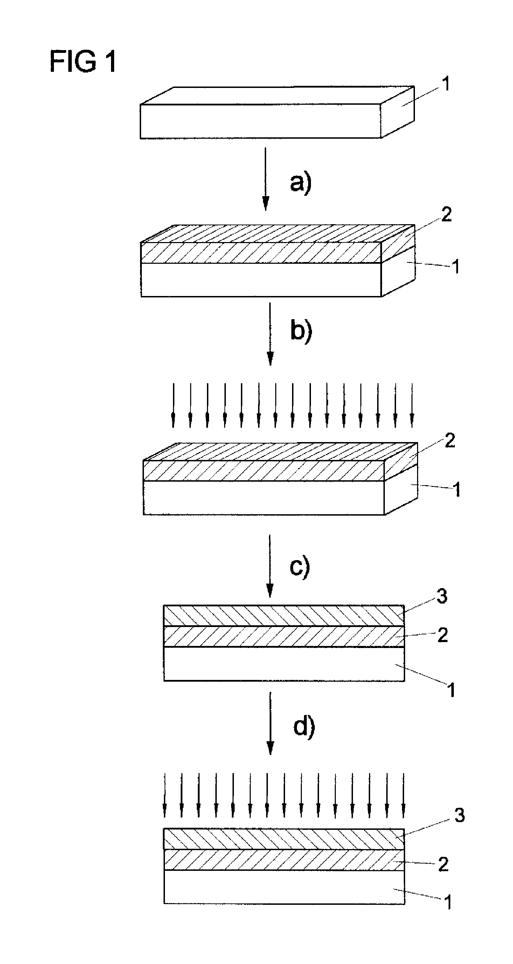

- Figur 1: eine schematische Darstellung einer Ausführungsform des erfindungsgemäßen Verfahrens.

Figur 1 zeigt schematisch eine Ausführungsform des erfindungsgemäßen Verfahrens. Dabei wird in Schritt a) auf eine Oberfläche einer Zementspanplatte 1 zunächst eine erste Lackschicht 2 aufgetragen. Vor Auftragen der ersten Lackschicht 2 wird die Oberfläche der Spanplatte 1 zunächst von anhaftenden Staub- und Schmutzpartikeln z.B. unter Verwendung einer geeigneten Bürste bzw. mittels Druckluft gereinigt.

Der Lack für die erste Lackschicht 2 auf der Basis von aliphatischen Acrylaten und Urethanacrylaten wird mittels eines Walzenauftragssystems kontinuierlich in einer Menge von 60 g/m² aufgetragen. Der Lack wird mit einer Viskosität von 60 dPas bei 25°C auf die Oberfläche der Spanplatte aufgespritzt.

Anschließend wird die Spanplatte kontinuierlich unter einer UV-Lampe entlang geführt, wobei es zu einer ersten Vorhärtung der aufgetragenen ersten Lackschicht 2 kommt (Schritt b). Die Verweilzeit der Spanplatte im Bereich der UV-Bestrahlung beträgt ca. 1 bis 2 min.

Nach Vorhärtung der ersten Lackschicht 2 wird in Schritt c) zur Vervollständigung des Lackaufbaus eine zweite Lackschicht 3 auf die vorgehärtete erste Lackschicht 2 aufgetragen.

Der zur Herstellung der zweiten Lackschicht 3 verwendete Lack auf der Basis von aliphatischen Acrylaten und Urethanacrylaten weist bei 25°C eine Viskosität von 40 dPas auf und wird kontinuierlich mittels eines zweiten Walzenauftragsaggregats mit einer Menge von 60 g/m² aufgetragen.

Anschließend wird der gesamte Lackaufbau in Schritt d) unter Verwendung eines Elektronenstrahlers vollständig ausgehärtet und kann im weiteren Verlauf mit geeigneten Dekoren versehen werden.

### Ausführungsbeispiel

Die zementgebundene Spanplatte wird einem Reinigungsschliff unter Verwendung eines 120"iger Korn unterworfen. Anschließend wird in einer Doppelreverse-Lackmaschine ein Lackauftrag von 60g Lack/m² appliziert. Der Lack wird durch UV-Strahlung oder Elektronenstrahlen (30 kGray) angehärtet. Danach werden in einer zweiten Doppelreverse-Lackmaschine nochmals 60g Lack/m² aufgetragen und durch Elektronenstrahlung (60kGray) ausgehärtet. Der Vorschub liegt dabei bei 30 m/min.

## Patentansprüche

1. Verfahren zum Lackieren von Spanplatten, insbesondere Zementspanplatten, umfassend die Schritte
a) Auftragen von mindestens einem ersten Lack mit einer Viskosität zwischen 10 bis 100 dPas zur Ausbildung von mindestens einer ersten Lackschicht,
b) zumindest teilweise Härtung der mindestens ersten Lackschicht, und
c) Auftragen von mindestens einem zweiten Lack mit einer Viskosität zwischen 10 bis 100 dPas zur Ausbildung von mindestens einer zweiten Lackschicht auf der mindestens ersten Lackschicht.

2. Verfahren nach Anspruch 1, **dadurch gekennzeichnet, dass** das Auftragen der mindestens ersten und/oder mindestens zweiten Lackschicht bevorzugt bei Temperaturen zwischen 25 und 40°C, insbesondere zwischen 25°C und 30°C erfolgt.

3. Verfahren nach Anspruch 1 oder 2, **dadurch gekennzeichnet, dass** mindestens eine Oberfläche der Spanplatte vor Auftragen der mindestens ersten Lackschicht in Schritt a) einem Reinigungsschritt ausgesetzt wird.

4. Verfahren nach einem der vorhergehenden Ansprüche, **dadurch gekennzeichnet, dass** nach dem Auftragen der mindestens zweiten Lackschicht eine vollständige Härtung der aufgetragenen Lackschichten erfolgt.

5. Verfahren nach einem der vorhergehenden Ansprüche, **dadurch gekennzeichnet, dass** der Lack der mindestens ersten Lackschicht und der mindestens zweiten Lackschicht jeweils gleich oder verschieden voneinander sind.

6. Verfahren nach einem der vorhergehenden Ansprüche, **dadurch gekennzeichnet, dass** die Viskosität des Lackes zur Herstellung der mindestens ersten und/oder mindestens zweiten Lackschicht 10 bis 75 dPas, bevorzugt 12 bis 60 dPas, insbesondere bevorzugt 45 dPas beträgt.

7. Verfahren nach einem der vorhergehenden Ansprüche, **dadurch gekennzeichnet, dass** der Lack für die mindestens erste und/oder mindestens zweite Lackschicht in einer Menge zwischen 30 bis 120 g/m², bevorzugt 50 bis 80 g/m², insbesondere bevorzugt 60 g/m² aufgetragen wird.

8. Verfahren nach einem der vorhergehenden Ansprüche, **dadurch gekennzeichnet, dass** der verwendete Lack ein Polyacrylatlack ist.

9. Verfahren nach Anspruch 8, **dadurch gekennzeichnet, dass** Lacke auf der Basis von Polyesteracrylaten, Epoxidacrylaten, Urethanacrylaten und aliphatischen Acrylaten und/oder deren Gemischen verwendet werden,

10. Verfahren nach einem der vorhergehenden Ansprüche, **dadurch gekennzeichnet, dass** die Aushärtung der Lackschichten mittels Wärme, UV-Strahlung und/oder Elektronenstrahlung erfolgt.

11. Verfahren nach einem der vorhergehenden Ansprüche, **dadurch gekennzeichnet, dass** der Lackaufbau umfassend die mindestens erste und die mindestens zweite Lackschicht eine Dicke zwischen 10 bis 1000 µm, bevorzugt zwischen 50 bis 500 µm, insbesondere bevorzugt zwischen 50 bis 150 µm aufweist.

12. Verfahren nach einem der vorhergehenden Ansprüche, **dadurch gekennzeichnet, dass** der Lack für die mindestens erste und/oder die mindestens zweite Lackschicht mittels Walzen auf die Oberfläche der Spanplatte aufgebracht wird.

13. Spanplatte, insbesondere Zementspanplatte herstellbar in einem Verfahren nach einem der vorhergehenden Ansprüche
**dadurch gekennzeichnet, dass**
mindestens eine Oberfläche der Spanplatte mindestens eine erste und eine zweite Lackschicht aufweist, wobei die mindestens erste Lackschicht unmittelbar auf einer unbearbeiteten Oberfläche der Spanplatte angeordnet ist.

14. Spanplatte nach Anspruch 13, **dadurch gekennzeichnet, dass** die Gesamtdicke der mindestens zwei Lackschichten zwischen 10 bis 1000 µm, bevorzugt zwischen 50 bis 500 µm, insbesondere bevorzugt zwischen 50 bis 150 µm beträgt.

15. Verwendung einer Spanplatte nach einem der Ansprüche 13 oder 14 zur Anwendung im Außenbereich, insbesondere als Fassadenplatte.

## Geänderte Patentansprüche

### Geänderte Patentansprüche gemäss Regel 137(2) EPÜ.

**1.** Verfahren zum Lackieren von Spanplatten, insbesondere Zementspanplatten, umfassend die Schritte
a) Auftragen von mindestens einem ersten Lack mit einer Viskosität zwischen 45 bis 100 dPas zur Ausbildung von mindestens einer ersten Lackschicht,
b) zumindest teilweise Härtung der mindestens ersten Lackschicht, und
c) Auftragen von mindestens einem zweiten Lack mit einer Viskosität zwischen 45 bis 100 dPas zur Ausbildung von mindestens einer zweiten Lackschicht auf der mindestens ersten Lackschicht.

**2.** Verfahren nach Anspruch 1, **dadurch gekennzeichnet, dass** das Auftragen der mindestens ersten und/oder mindestens zweiten Lackschicht bevorzugt bei Temperaturen zwischen 25 und 40°C, insbesondere zwischen 25°C und 30°C erfolgt.

**3.** Verfahren nach Anspruch 1 oder 2, **dadurch gekennzeichnet, dass** mindestens eine Oberfläche der Spanplatte vor Auftragen der mindestens ersten Lackschicht in Schritt a) einem Reinigungsschritt ausgesetzt wird.

**4.** Verfahren nach einem der vorhergehenden Ansprüche, **dadurch gekennzeichnet, dass** nach dem Auftragen der mindestens zweiten Lackschicht eine vollständige Härtung der aufgetragenen Lackschichten erfolgt.

**5.** Verfahren nach einem der vorhergehenden Ansprüche, **dadurch gekennzeichnet, dass** der Lack der mindestens ersten Lackschicht und der mindestens zweiten Lackschicht jeweils gleich oder verschieden voneinander sind.

**6.** Verfahren nach einem der vorhergehenden Ansprüche, **dadurch gekennzeichnet, dass** die Viskosität des Lackes zur Herstellung der mindestens ersten und/oder mindestens zweiten Lackschicht 45 bis 75 dPas, bevorzugt 45 bis 60 dPas beträgt.

**7.** Verfahren nach einem der vorhergehenden Ansprüche, **dadurch gekennzeichnet, dass** der Lack für die mindestens erste und/oder mindestens zweite Lackschicht in einer Menge zwischen 30 bis 120 g/m², bevorzugt 50 bis 80 g/m², insbesondere bevorzugt 60 g/m² aufgetragen wird.

**8.** Verfahren nach einem der vorhergehenden Ansprüche, **dadurch gekennzeichnet, dass** der verwendete Lack ein Polyacrylatlack ist.

**9.** Verfahren nach Anspruch 8, **dadurch gekennzeichnet, dass** Lacke auf der Basis von Polyesteracrylaten, Epoxidacrylaten, Urethanacrylaten und aliphatischen Acrylaten und/oder deren Gemischen verwendet werden,

**10.** Verfahren nach einem der vorhergehenden Ansprüche, **dadurch gekennzeichnet, dass** die Aushärtung der Lackschichten mittels Wärme, UV-Strahlung und/oder Elektronenstrahlung erfolgt.

**11.** Verfahren nach einem der vorhergehenden Ansprüche, **dadurch gekennzeichnet, dass** der Lackaufbau umfassend die mindestens erste und die mindestens zweite Lackschicht eine Dicke zwischen 10 bis 1000 µm, bevorzugt zwischen 50 bis 500 µm, insbesondere bevorzugt zwischen 50 bis 150 µm aufweist.

**12.** Verfahren nach einem der vorhergehenden Ansprüche, **dadurch gekennzeichnet, dass** der Lack für die mindestens erste und/oder die mindestens zweite Lackschicht mittels Walzen auf die Oberfläche der Spanplatte aufgebracht wird.
